(19) Europäisches Patentamt
European Patent Office
Office européen des brevets

(11) EP 3 980 471 B1

(12) **FASCICULE DE BREVET EUROPEEN**

(45) Date de publication et mention de la délivrance du brevet:
**03.08.2022 Bulletin 2022/31**

(21) Numéro de dépôt: **20740684.4**

(22) Date de dépôt: **07.05.2020**

(51) Classification Internationale des Brevets (IPC):
***C08F 2/44*** (2006.01) ***C08F 2/32*** (2006.01)
***C08F 2/38*** (2006.01) ***C08F 4/04*** (2006.01)
***C08F 220/34*** (2006.01) ***C08F 220/56*** (2006.01)
***C08J 3/075*** (2006.01) ***C08J 3/12*** (2006.01)
***C08L 33/26*** (2006.01)

(52) Classification Coopérative des Brevets (CPC):
(C-Sets disponibles)
**C08F 2/32; C08F 2/38; C08F 2/44; C08F 4/04;**
C08F 2438/01 (Cont.)

(86) Numéro de dépôt international:
**PCT/FR2020/050760**

(87) Numéro de publication internationale:
**WO 2020/245517 (10.12.2020 Gazette 2020/50)**

(54) **PROCEDE DE PREPARATION DE POLYMERES STRUCTURES SOUS FORME DE POUDRE PAR VOIE GEL**

VERFAHREN ZUR HERSTELLUNG VON STRUKTURIERTEN POLYMEREN IN PULVERFORM NACH DEM GEL-VERFAHREN

METHOD FOR PREPARING STRUCTURED POLYMERS IN POWDER FORM BY THE GEL PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.06.2019 FR 1905973**

(43) Date de publication de la demande:
**13.04.2022 Bulletin 2022/15**

(73) Titulaire: **SPCM SA**
**42160 Andrézieux-Bouthéon (FR)**

(72) Inventeurs:
- **DUCHADEAU, Aurélien**
  **42160 ANDREZIEUX BOUTHEON (FR)**
- **TAVERNIER, Bruno**
  **42160 ANDREZIEUX BOUTHEON (FR)**
- **COCCOLO, Sébastien**
  **42160 ANDREZIEUX BOUTHEON (FR)**
- **FAVERO, Cédrick**
  **42160 ANDREZIEUX BOUTHEON (FR)**

(74) Mandataire: **Cabinet Laurent & Charras**
**Le Contemporain**
**50 Chemin de la Bruyère**
**69574 Dardilly Cedex (FR)**

(56) Documents cités:
**WO-A1-03/006532 AU-A1- 2011 236 000**
**US-A- 4 055 607**

EP 3 980 471 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08F 220/34, C08F 220/56**

## Description

### DOMAINE DE L'INVENTION

La présente invention concerne un procédé de préparation de polymères synthétiques hydrosolubles structurés de haut poids moléculaire sous forme de poudre utilisés comme floculants ou épaississants dans de multiples applications. Plus précisément, l'invention a pour objet un procédé gel pour l'obtention de polymères synthétiques hydrosolubles structurés de haut poids moléculaire.

### ART ANTERIEUR DE LA TECHNIQUE

Les polymères hydrosolubles synthétiques de haut poids moléculaire sont couramment utilisés pour de nombreuses applications en raison de leurs propriétés floculantes ou épaississantes. En effet, ces polymères ont une utilisation dans l'industrie du pétrole et du gaz, la fracturation hydraulique, les procédés de fabrication du papier, la déshydratation des boues, le traitement de l'eau, la construction, l'industrie minière, les cosmétiques, l'agriculture, l'industrie du textile et de la détergence.

A titre d'exemple, le caractère floculant de ces polymères synthétiques hydrosolubles de haut poids moléculaire est mis à profit dans le domaine du traitement de l'eau / la déshydratation des boues. En effet, après une étape optionnelle de coagulation où les particules colloïdales d'une eau donnée (assimilables à des sphères de taille inférieure à 1 micromètre) sont déstabilisées, la floculation représente l'étape où les particules sont rassemblées en agrégats de haut poids moléculaire pour engendrer une sédimentation rapide. Les polymères hydrosolubles ainsi utilisés pour le traitement de l'eau sont majoritairement sous forme de poudre ou d'émulsion inverse eau dans huile. Selon les eaux à traiter, les propriétés physiques du floculant sont modulées. Ainsi, on peut adapter le caractère ionique (non ionique, anionique, cationique, amphotère, zwitterionique), le poids moléculaire ou encore la structure (linéaire ou structurée, voire réticulée) du polymère hydrosoluble.

Le caractère épaississant de ces polymères peut quant à lui être exploité dans le domaine de la récupération assistée du pétrole (RAP ou EOR acronyme anglais de « Enhanced Oil Recovery »). L'efficacité du balayage par injection d'eau est généralement améliorée par l'addition de (co)polymères synthétiques hydrosolubles de haut poids moléculaire. Les bénéfices attendus et prouvés de l'utilisation de ces (co)polymères, au travers de la « viscosification » des eaux injectées, sont l'amélioration du balayage et la réduction du contraste de viscosité entre les fluides pour maîtriser leur ratio de mobilité dans le champ, et ce afin de récupérer le pétrole rapidement et efficacement. Ces (co)polymères augmentent la viscosité de l'eau.

Les polymères hydrosolubles structurés de haut moléculaire (branchés (ramifiés), sous forme d'étoile (star) ou de peigne (comb)) sont obtenus principalement sous forme d'émulsion inverse eau dans huile. Cette émulsion peut ensuite être atomisée pour obtenir une poudre. Toutefois, la poudre ainsi obtenue est fine, pulvérulente et ne possède pas de bonnes propriétés d'écoulement.

Les polymères synthétiques hydrosolubles de haut poids moléculaire linéaires sous forme finale de poudre peuvent être obtenus par polymérisation radicalaire selon un procédé gel qui est efficace. Cependant, tel quel, ce procédé ne permet pas de contrôler finement la structure du polymère si ce n'est pour obtenir des polymères complètement réticulés et donc des polymères hydro-gonflables (super-absorbants). Il n'est donc pas adapté pour l'obtention de polymères hydrosolubles structurés de haut poids moléculaire.

Pour obtenir une architecture précisément définie en polymérisation radicalaire par voie gel, une méthode consiste à utiliser un macroamorceur, tel qu'un polyazoïque comme décrit dans la demande de brevet WO 2010/091333 de Nalco. L'inconvénient majeur est que ce type de composé est instable et coûteux. De plus, les polymères structurés obtenus par ce procédé gel, ne permettent pas d'atteindre des taux de structuration aussi élevés que ce qui est atteignable en polymérisation de type émulsion inverse.

Alternativement, les poudres atomisées (issues de la polymérisation en émulsion) peuvent être agglomérées ou mélangées avec d'autres poudres issues du procédé gel mais ceci représente autant d'étapes coûteuses et fastidieuses (voir la demande de brevet japonais de la Demanderesse JP 2018-216407).

Pour des questions de logistique, de transport et d'approvisionnement en floculants ou en épaississants, quelle que soit l'application visée, la forme physique préférée de ces polymères hydrosolubles est la poudre (% en poids de matière active élevé).

### EXPOSE DE L'INVENTION

Le marché mondial des floculants et épaississants synthétiques étant en plein essor, il faut pouvoir disposer d'un large panel structural de polymères synthétiques hydrosolubles de haut poids moléculaire pour répondre aux besoins et spécificités des différentes applications.

Par polymère, on désigne un homopolymère ou un copolymère, c'est-à-dire un polymère constitué d'un seul type de monomère (homopolymère) ou un polymère constitué d'au moins deux types de monomères distincts. Un (co)polymère désigne ces deux alternatives, à savoir un homopolymère ou un copolymère.

Face aux difficultés pour obtenir des floculants ou épaississants synthétiques structurés sous forme de poudre, alors que cette forme physique facilite leur approvisionnement pour toute application, La Demanderesse a découvert, de manière surprenante, un nouveau

procédé gel pour la préparation de ces polymères. Ce procédé consiste à introduire du polymère structuré sous forme d'émulsion inverse ou de dispersion dans l'huile lors du procédé de polymérisation sous forme gel d'un polymère.

L'invention concerne aussi l'utilisation des polymères issus du procédé de l'invention dans l'industrie du pétrole et du gaz, la fracturation hydraulique, les procédés de fabrication du papier, le traitement de l'eau, la déshydratation des boues, la construction, l'industrie minière, les cosmétiques, l'agriculture, l'industrie du textile et la détergence.

L'invention concerne donc un procédé pour préparer un polymère hydrosoluble structuré de poids moléculaire moyen en poids supérieur à 1 million de daltons et ayant un coefficient de Huggins $K_H$ supérieur à 0,4,
le coefficient de Huggins $K_H$ étant mesuré à une concentration en poids en polymère de 5 g.L$^{-1}$, dans une solution aqueuse à 0,4 N de nitrate de sodium, à pH 3,5 et à une température de 25°C, le procédé comprenant les étapes successives suivantes :

a) Préparer un polymère, sous forme d'un gel, par polymérisation par voie radicalaire en solution aqueuse à une température d'initiation comprise entre -20°C et +50°C d'au moins un monomère éthylénique monoinsaturé hydrosoluble,
la concentration en poids totale en monomère(s) par rapport à la charge de polymérisation étant comprise entre 10 et 60 % ;
b) Granuler le gel de polymère ainsi obtenu ;
c) Sécher le gel de polymère pour obtenir un polymère sous forme de poudre ;
d) Broyer et tamiser la poudre ;

au moins 10% en poids de polymère hydrosoluble, par rapport au poids total du ou des monomère(s) éthylénique(s) monoinsaturé(s) hydrosoluble mis en jeu dans l'étape a), étant ajoutés pendant l'étape de polymérisation a) et optionnellement pendant l'étape de granulation b), le polymère hydrosoluble étant structuré et ajouté sous forme d'émulsion inverse eau dans huile ou de dispersion dans l'huile.

Tel qu'utilisé ici, le terme "polymère hydrosoluble" signifie que le polymère donne une solution aqueuse sans particule insoluble lorsqu'il est dissous sous agitation pendant 4 heures à 25°C et avec une concentration de 10 g.L$^{-1}$ dans l'eau.

Selon la présente invention, le "poids moléculaire" (c'est-à-dire le poids moléculaire moyen en poids) est déterminé par la viscosité intrinsèque. La viscosité intrinsèque peut être mesurée par des méthodes connues de l'homme du métier et peut notamment être calculée à partir des valeurs de viscosité réduite pour différentes concentrations par une méthode graphique consistant à tracer les valeurs de viscosité réduite (sur l'axe des ordonnées) en fonction des concentrations (sur l'axe des abscisses) et en extrapolant la courbe à une concentration nulle. La valeur de viscosité intrinsèque est lue sur l'axe des ordonnées ou à l'aide de la méthode des moindres carrés. Ensuite, le poids moléculaire moyen en poids peut être déterminé par la célèbre équation de Mark-Houwink :

$$[\eta] = K\, M^{\alpha}$$

[η] représente la viscosité intrinsèque du polymère déterminée par la méthode de mesure de la viscosité en solution,
K représente une constante empirique,
M représente le poids moléculaire du polymère,
α représente le coefficient de Mark-Houwink
α et K dépendent du système particulier polymère-solvant

Le poids moléculaire moyen des polymères hydrosolubles structurés obtenus selon le procédé de l'invention est supérieur à 1 million de daltons, avantageusement supérieur à 2 millions de daltons et encore plus avantageusement supérieur à 5 millions de daltons. Le poids moléculaire moyen des polymères hydrosolubles structurés obtenus selon le procédé de l'invention est avantageusement inférieur à 20 millions daltons, plus avantageusement inférieur à 15 millions de daltons, et encore plus avantageusement inférieur à 10 millions de daltons.

Le terme polymère structuré hydrosoluble exclut que le polymère soit linéaire mais aussi que le polymère soit complètement réticulé et donc sous forme de polymère hydro-gonflable. En d'autres termes, par polymère structuré, on désigne un polymère non linéaire qui possède des chaînes latérales.

Ainsi le polymère structuré peut être sous forme de polymère branché (ramifié), sous forme de peigne (comb) ou sous forme d'étoile (star).

Le coefficient de Huggins $K_H$ du polymère structuré hydrosoluble est issu de l'équation de Huggins :

$$\eta_{red} = [\eta] + K_H\, [\eta]^2\, C$$

Avec $\eta_{red}$ la viscosité réduite, C la concentration en poids du polymère, et [η] la viscosité intrinsèque.

Ainsi le coefficient de Huggins $K_H$ est déterminé à une concentration en poids en polymère de 5 g.L$^{-1}$, dans une solution aqueuse 0,4 N de nitrate de sodium, à pH 3,5 et à une température de 25°C.

Le coefficient de Huggins $K_H$ est un paramètre indiquant la morphologie du polymère dans un solvant donné, et à une température et une concentration données. $K_H$ augmente avec la ramification du polymère.

Le coefficient de Huggins $K_H$ du polymère structuré hydrosoluble obtenu par le procédé de l'invention

est supérieur à 0,4, préférentiellement à 0,5 et encore plus préférentiellement à 0,6.

De manière générale, les polymères linéaires présentent un coefficient d'Huggins inférieur à 0,4. En revanche, il n'est pas mesurable pour les polymères réticulés formant des polymères hydrogonflants (water swellable).

## Polymère hydrosoluble structuré en émulsion eau dans huile ou en dispersion dans l'huile

L'émulsion inverse eau dans huile comprenant au moins un polymère hydrosoluble structuré ajoutée à l'étape a) et optionnellement l'étape b) du procédé de l'invention contient :

- une phase hydrophile comprenant au moins un polymère structuré hydrosoluble ;
- une phase lipophile ;
- au moins un agent émulsifiant ;
- optionnellement, un agent tensioactif.

La phase lipophile peut être une huile minérale, une huile végétale, une huile synthétique ou un mélange de plusieurs de ces huiles. Des exemples d'huile minérale sont les huiles minérales contenant des hydrocarbures saturés de type aliphatique, naphténique, paraffinique, isoparaffinique, cycloparaffinique ou naphtyle. Des exemples d'huile synthétique sont le polydécène hydrogéné ou le polyisobutène hydrogéné, les esters tel que le stéarate d'octyle ou l'oléate de butyle. La gamme de produits Exxsol® d'Exxon convient parfaitement.

En général, le rapport pondéral de la phase hydrophile à la phase lipophile dans l'émulsion inverse est de préférence de 50/50 à 90/10.

Le produit obtenu par le procédé de l'invention est un polymère hydrosoluble structuré sous forme de poudre. Pour leur utilisation ultérieure, ces polymères doivent pouvoir être dissous facilement. De plus, le gel obtenu au terme de l'étape a) doit pouvoir être tel que les étapes b) à d) se déroulent avec succès. Ainsi préférentiellement, l'huile de l'émulsion inverse ou de la dispersion a un point éclair supérieur à 60°C.

Dans la présente invention, le terme "agent émulsifiant" désigne un agent capable d'émulsifier de l'eau dans une huile et un "agent tensioactif" est un agent capable d'émulsionner une huile dans de l'eau. Généralement, on considère qu'un agent tensioactif est un tensioactif ayant un HLB supérieur ou égal à 10, et un agent émulsifiant est un tensioactif ayant un HLB strictement inférieur à 10.

L'équilibre hydrophile-lipophile (HLB) d'un composé chimique est une mesure de son degré d'hydrophilie ou lipophile, déterminé en calculant les valeurs des différentes régions de la molécule, comme décrit par Griffin en 1949 (Griffin WC, Classification of Surface-Active Agents by HLB, Journal of the Society of Cosmetic Chemists, 1949, 1, pages 311-326).

Avantageusement l'émulsion inverse contient comme agent émulsifiant choisi parmi la liste suivante : les polyesters ayant un poids moléculaire compris entre 1000 et 3000, les produits de condensation entre un acide poly(isobutényl) succinique ou son anhydride et un polyéthylène glycol, des copolymères séquences ayant un poids moléculaire compris entre 2500 et 3500, comme par exemple ceux vendus sous les noms Hypermer®, des extraits de sorbitan, tels que le monooléate ou les polyoléates de sorbitan, l'isostéarate de sorbitan ou le sesquioléate de sorbitan, les esters de sorbitan polyéthoxylés, ou encore l'alcool oléocétylique diéthoxylé ou le laurylacrylate de tétraéthoxylé, des produits de condensation d'alcools gras supérieurs à l'éthylène, comme produit de réaction de l'alcool oléique avec 2 unités oxyde d'éthylène; des produits de condensation d'alkylphénols et d'oxyde d'éthylène, tels que le produit de réaction du nonyl phénol avec 4 unités d'oxyde d'éthylène. Des amines grasses éthoxylées telles que Witcamide® 511, les produits à base de bétaïne et l'amine éthoxylée sont également de bons candidats en tant qu'agents émulsifiants.

L'émulsion inverse comprend avantageusement de 0,5 à 10% en poids d'au moins un agent émulsifiant et encore plus avantageusement de 0,5 à 5% en poids.

Une dispersion dans l'huile comprenant au moins un polymère hydrosoluble structuré comprend essentiellement les mêmes ingrédients que l'émulsion inverse à la différence que la phase hydrophile (eau) a été éliminée en grande partie par exemple par distillation azéotropique. De ce fait le polymère se retrouve sous forme de particules dispersées dans une phase lipophile.

Le poids moléculaire moyen des polymères hydrosolubles structurés sous forme d'émulsion inverse eau dans huile ou de dispersion dans l'huile est avantageusement supérieur à 1 million de daltons, encore plus avantageusement supérieur à 1,5 millions de daltons et encore plus avantageusement supérieur à 2 millions de daltons. Il est avantageusement inférieur à 20 millions daltons, plus avantageusement inférieur à 10 millions de daltons et encore plus avantageusement inférieur à 7 millions de daltons.

Le polymère hydrosoluble structuré sous forme d'émulsion inverse eau dans huile ou de dispersion est avantageusement issu de la polymérisation de monomères éthyléniques monoinsaturés qui peuvent être non ioniques et/ou anioniques et/ou cationiques.

Avantageusement, le polymère hydrosoluble structuré sous forme d'émulsion inverse eau dans huile ou de dispersion est un copolymère de de monomères éthyléniques monoinsaturés non ioniques (avantageusement 10 à 100 mol%) et, le cas échéant, de monomères anioniques et/ou cationiques.

Les monomères non ioniques peuvent être choisis parmi l'acrylamide, le méthacrylamide, le N,N-diméthylacrylamide, la N-vinylformamide, le N-vinyl acétamide, la N-vinylpyridine et la N-vinylpyrrolidone, l'acryloyl morpholine (ACMO) et la diacétone acrylamide.

Les monomères anioniques peuvent être choisis parmi l'acide acrylique, l'acide méthacrylique, l'acide itaconique, l'acide maléique, l'acide 2-acrylamido-2-méthylpropane sulfonique, l'acide vinylsulphonique, l'acide vinylphosphonique, ledit monomère anionique étant non salifié, partiellement ou totalement salifié.

Les sels des monomères anioniques (forme salifiée) incluent notamment les sels de métal alcalino-terreux (de préférence le calcium ou le magnésium) ou de métal alcalin (de préférence le sodium ou le lithium) ou d'ammonium (notamment ammonium quaternaire).

Les monomères cationiques peuvent être choisis parmi l'acrylate de diméthylaminoéthyle quaternisé, le méthacrylate de diméthylaminoéthyle quaternisé, le chlorure de diméthyldiallylammonium, le chlorure d'acrylamido propyltriméthyl ammonium, et le chlorure de méthacrylamido propyltriméthyl ammonium. L'homme du métier saura préparer les monomères quaternisés, par exemple au moyen d'halogénure d'alkyle de type R-X, R étant un groupement alkyle et X étant un halogène (notamment le chlorure de méthyle).

Le polymère hydrosoluble structuré peut optionnellement comprendre un ou plusieurs monomères hydrophobes choisis, notamment, parmi les monomère de type acrylamide, acrylique, vinylique, allylique ou maléique possédant une fonction hydrophobe pendante choisis préférentiellement parmi les dérivés de l'acrylamide comme les N-alkylacrylamides, par exemple, le diacétone acrylamide, le N-tert-butylacrylamide, l'octylacrylamide, et les N,N-dialkylacrylamides comme le N,N-dihexylacrylamide et les dérivés d'acide acrylique comme les alkyl acrylates et méthacrylates.

Le polymère hydrosoluble structuré peut optionnellement comprendre un monomère zwitterionique de type acrylamide, acrylique, vinylique, allylique ou maléique possédant une fonction amine ou ammonium quaternaire et une fonction acide de type carboxylique, sulfonique ou phosphorique. On peut citer, en particulier et de façon non limitative les dérivés de l'acrylate de diméthylaminoéthyl, tel que le 2-((2-(acryloyloxy)éthyl) diméthylammonio) éthane-1-sulfonate, le 3-((2-(acryloyloxy)éthyl) diméthylammonio) propane-1-sulfonate, le 4-((2-(acryloyloxy)éthyl) diméthylammonio) butane-1-sulfonate, le [2-(acryloyloxy)éthyl)] (diméthylammonio) acetate, les dérivés du méthacrylate de diméthylaminoéthyle tel que le 2-((2-(méthacryloyloxy) éthyl) diméthylammonio) éthane-1-sulfonate, le 3-((2-(méthacryloyloxy) éthyl) diméthylammonio) propane-1-sulfonate, le 4-((2-(méthacryloyloxy) éthyl) diméthylammonio) butane-1-sulfonate, le [2-(méthacryloyloxy)éthyl)] (diméthylammonio) acétate, les dérivés du diméthylamino propylacrylamide tel que le 2-((3-acrylamidopropyl) diméthylammonio) éthane-1-sulfonate, le 3-((3-acrylamidopropyl) dimthylammonio) propane-1-sulfonate, le 4-((3-acrylamidopropyl) diméthylammonio) butane-1-sulfonate, le [3-(acryloyloxy) propyl)] (diméthylammonio) acétate, les dérivés du diméthylamino propyl méthylacrylamide tel que le 2-((3-méthacrylamidopropyl) diméthylammonio) éthane-1-sulfonate, le 3-((3-méthacrylamidopropyl) diméthylammonio) propane-1-sulfonate, le 4-((3-méthacrylamidopropyl) diméthylammonio) butane-1-sulfonate et le [3-(méthacryloyloxy)propyl)] (diméthylammonio) acétate.

Optionnellement, le polymère hydrosoluble peut comprendre au moins un groupe à LCST ou à UCST.

Selon les connaissances générales de l'homme du métier, un groupe à LCST correspond à un groupe dont la solubilité dans l'eau pour une concentration déterminée, est modifiée au-delà d'une certaine température et en fonction de la salinité. Il s'agit d'un groupe présentant une température de transition par chauffage définissant son manque d'affinité avec le milieu solvant. Le manque d'affinité avec le solvant se traduit par une opacification ou une perte de transparence qui peut être due à une précipitation, une agrégation, une gélification ou une viscosification du milieu. La température de transition minimale est appelée « LCST » (température critique inférieure de solubilité, de l'acronyme anglais « Lower Critical Solution Température »). Pour chaque concentration de groupe à LCST, une température de transition par chauffage est observée. Elle est supérieure à la LCST qui est le point minimum de la courbe. En dessous de cette température, le (co)polymère est soluble dans l'eau, au-dessus de cette température, le (co)polymère perd sa solubilité dans l'eau.

Selon les connaissances générales de l'homme du métier, un groupe à UCST correspond à un groupe dont la solubilité dans l'eau pour une concentration déterminée, est modifiée en dessous d'une certaine température et en fonction de la salinité. Il s'agit d'un groupe présentant une température de transition par refroidissement définissant son manque d'affinité avec le milieu solvant. Le manque d'affinité avec le solvant se traduit par une opacification ou une perte de transparence qui peut être due à une précipitation, une agrégation, une gélification ou une viscosification du milieu. La température de transition maximale est appelée « UCST » (température critique supérieure de solubilité, de l'acronyme anglais « Upper Critical Solution Température »). Pour chaque concentration de groupe à UCST, une température de transition par refroidissement est observée. Elle est supérieure à la LCST qui est le point minimum de la courbe. Au-dessus de cette température, le (co)polymère est soluble dans l'eau, en-dessous de cette température, le (co)polymère perd sa solubilité dans l'eau.

Selon un mode de réalisation préféré, l'émulsion inverse eau dans huile ou la dispersion dans l'huile présente lors de l'étape a) et optionnellement l'étape b) du procédé de l'invention contient avantageusement entre 10 et 70 % en poids de polymère hydrosoluble structuré.

Le polymère hydrosoluble structuré en émulsion inverse peut être composé de monomères différents de ceux polymérisés à l'étape a). A titre d'exemple, le polymère structuré en émulsion inverse peut être composé de monomères cationiques et non ioniques et les monomères polymérisés à l'étape a) peuvent être anioniques et non ioniques.

Préférentiellement, le polymère hydrosoluble structuré contenu dans l'émulsion inverse ou dans la dispersion dans l'huile est composé des mêmes monomères éthyléniques monoinsaturés que ceux polymérisés à l'étape a).

Encore plus préférentiellement, la proportion de chaque monomère constituant le polymère hydrosoluble structuré contenu dans l'émulsion inverse ou dans la dispersion dans l'huile est composé des mêmes proportions de monomères éthyléniques monoinsaturés que ceux polymérisés à l'étape a).

Le polymère hydrosoluble structuré contenu dans l'émulsion inverse eau dans huile ou dans la dispersion dans l'huile peut être structuré par au moins un agent de structure, pouvant être choisi dans le groupe comprenant des monomères à insaturation polyéthylénique (ayant au minimum deux fonctions insaturées), comme par exemples les fonctions vinyliques, allyliques, acryliques et époxy et l'on peut citer par exemple le méthylène bis acrylamide (MBA), la diallylamine, la triallylamine, le chlorure de tétraallylammonium, le diméthacrylate de polyéthylène glycol ou encore par des macroamorceurs tels que les polypéroxydes, polyazoiques et les polyagents de transfert tels que les polymères polymercaptants ou encore les hydroxyalkylacrylates, les époxyvinyliques.

Le polymère hydrosoluble structuré contenu dans l'émulsion inverse eau dans huile ou dans la dispersion dans l'huile peut aussi être structuré en utilisant les techniques de polymérisation radicalaire contrôlée (CRP) ou et plus particulièrement de type RAFT (*Reversible Addition Fragmentation Chain Transfer*) en émulsion inverse.

Préférentiellement le polymère hydrosoluble structuré contenu dans l'émulsion inverse ou dans la dispersion est structuré avec des monomères éthyléniques comportant au moins deux insaturations.

Préférentiellement, le coefficient de Huggins du polymère structuré hydrosoluble de l'émulsion inverse eau dans huile ou de la dispersion dans l'huile (déterminé selon les mêmes conditions que pour le coefficient $K_H$ du polymère obtenu par le procédé de l'invention) est supérieur à 0,4, encore plus préférentiellement à 0,5 et encore plus préférentiellement à 0,6. Il est mesuré dans les conditions indiquées précédemment dans la description.

Selon une autre préférence, l'émulsion inverse eau dans huile de polymère hydrosoluble structuré peut comprendre :

- une phase hydrophile comprenant au moins un (co)polymère hydrosoluble structuré,
- une phase lipophile,
- au moins un polymère interfacial composé d'au moins un monomère de formule (I) :

[Chem. 1]

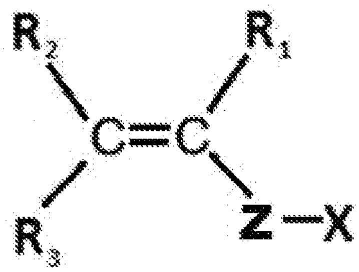

Formule (I)

dans laquelle,

- R1, R2, R3 sont indépendamment choisis dans le groupe comprenant un atome d'hydrogène, un groupe méthyle, un groupement carboxylate et Z-X,
- Z est choisi dans le groupe comprenant C(=O)-O ; C(=O)-NH ; O-C(=O) ; NH-C(=O)-NH ; NH-C(=O)-O ; et une chaine carbonée comportant de 1 à 20 atomes de carbone insaturée ou non, substituée ou non pouvant comporter un ou plusieurs hétéroatomes choisis parmi l'azote et l'oxygène,
- X est un groupe choisi parmi les alcanolamides, les esters de sorbitane, les esters de sorbitane éthoxylés, les esters de glyceryle, et les polyglycosides ; X comprenant une chaine hydrocarbonée, saturée ou insaturée, linéaire, ramifiée ou cyclique, éventuellement aromatique.

Le polymère interfacial obtenu par polymérisation d'au moins un monomère de formule (I) forme une enveloppe à l'interface de la phase hydrophile et de la phase lipophile.

De manière générale, la phase hydrophile se présente sous la forme de gouttelettes micrométriques dispersées, avantageusement émulsionnées, dans la phase lipophile. La taille moyenne de ces gouttelettes est avantageusement comprise entre 0,01 et 30 μm, plus avantageusement entre 0,05 et 3 μm. Le polymère interfacial vient donc se placer à l'interface entre la phase hydrophile et la phase lipophile au niveau de chaque gouttelette. Le polymère interfacial enveloppe partiellement ou totalement chacune de ces gouttelettes. La taille moyenne des gouttelettes est avantageusement mesurée avec un appareil de mesure laser utilisant les techniques conventionnelles qui font partie des connaissances générales de l'homme de métier. Un appareil de type Mastersizer de la société Malvern pourra être utilisé à cet effet.

De manière avantageuse, le polymère interfacial comprend entre 0,0001 et 10 %, plus avantageusement entre 0,0001 et 5 % encore plus avantageusement de 0,0001 à 1% de monomère de formule (I), par rapport au nombre total de monomères.

Le polymère interfacial forme une enveloppe

autour des gouttelettes formant la phase hydrophile. Outre les monomères mentionnés ci-dessus, le polymère interfacial peut comprendre au moins un agent de structure. L'agent de structure est avantageusement choisi parmi les diacrylamides ou méthacrylamides de diamines ; les esters acryliques de composés di, tri, ou tétrahydroxy ; les esters méthacryliques de composés di, tri, ou tétrahydroxy ; les composés divinyliques préférentiellement séparés par un groupement azo; les composés diallyliques préférentiellement séparés par un groupement azo ; les esters vinyliques d'acides di ou trifonctionnels; les esters allyliques d'acides di ou trifonctionnels; la méthylènebisacrylamide ; la diallylamine ; la triallylamine ; le chlorure de tétraallylammonium ; la divinylsulfone ; le diméthacrylate de polyéthylène glycol et l'éther diallylique de diéthylèneglycol.

## Polymérisation gel

La polymérisation pour l'étape a) du procédé de l'invention est effectuée par voie radicalaire. Elle inclut la polymérisation par radicaux libres au moyen d'initiateurs UV, azoïques, redox ou thermiques ainsi que les techniques de polymérisation radicalaire contrôlée (CRP) ou et plus particulièrement de type RAFT (Reversible Addition Fragmentation Chain Transfer).

La charge de polymérisation correspond à la solution de monomères éthyléniques monoinsaturés hydrosolubles additivée optionnellement de régulateurs de polymérisation usuels avant le début de la polymérisation. Les régulateurs de polymérisation usuels sont par exemple des composés soufrés tels que l'acide thioglycolique, les mercapto alcools, le dodecyl mercaptan, les amines tels que l'éthanolamine, la diéthanolamine, la morpholine et les phosphites tel que les hypophosphites de sodium. Dans le cas d'une polymérisation de type RAFT, des régulateurs de polymérisation spécifiques tels que ceux comprenant un groupe de transfert comprenant la fonction -S-CS-, peuvent être utilisés. On peut notamment citer ces composés de la famille des xanthates (-S-CS-O-), des dithioesters -S-CS-Carbone), des trithiocarbonates (-S-CS-S-), ou des dithiocarbamates (-S-CS-Azote). Parmi les composés de la famille des xanthates, le O-ethyl-S-(1-methoxy carbonyl ethyl) xanthate est largement employé pour sa compatibilité avec les monomères de nature acrylique.

Les initiateurs de polymérisation utilisés peuvent être tous les composés qui se dissocient en radicaux dans les conditions de polymérisation, par exemple : les peroxydes organiques, les hydroperoxydes, le peroxyde d'hydrogène, les persulfates, les composés azoïques et les catalyseurs rédox. L'utilisation d'initiateurs solubles dans l'eau est préférée. Dans certains cas, il est avantageux d'utiliser des mélanges de divers initiateurs de polymérisation, par exemple mélanges de catalyseurs redox et composés azoïques.

Les peroxydes et hydroperoxydes organiques appropriés sont, par exemple, le peroxodisulfate de sodium ou de potassium, le peroxyde d'acétylacétone, le peroxyde de méthyléthylcétone, l'hydroperoxyde de tert-butyle, l'hydroperoxyde de cumène, le perpivalate de tert-amyle, le perpivalate de tert-butyle, le perneohexanoate de tert-butyle, le perbuto-butylate de tert-butyle, -éthylhexanoate, perisononanoate de tert-butyle, permaléate de tert-butyle, perbenzoate de tert-butyle, per-3,5,5-triméthylhexanoate de tert-butyle et perneodécanoate de tert-amyle.

Les persulfates appropriés peuvent être choisis parmi les persulfates de métaux alcalins tel que le persulfate de sodium.

Les initiateurs azoïques appropriés sont avantageusement solubles dans l'eau et choisis dans la liste suivante : dichlorhydrate de 2,2'-azobis- (2-amidinopropane), 2,2'-azobis (N, N'-diméthylène) dichlorhydrate d'isobutyramidine, 2-(azo(1-cyano-1-methylethyl))-2-methylpropane nitrile, 2,2'-azobis [2- (2 ' -dimidazoline-2-yl) propane] dichlorhydrate et acide 4,4'-azobis (acide 4-cyanovalérique). Lesdits initiateurs de polymérisation sont utilisés en quantités habituelles, par exemple en quantités de 0,001 à 2%, de préférence de 0,01 à 1% en poids, par rapport aux monomères à polymériser.

En tant que composant oxydant, les catalyseurs rédox contiennent au moins l'un des composés précités et, en tant que composant réducteur, par exemple l'acide ascorbique, le glucose, le sorbose, l'hydrogénosulfite, le sulfite, le thiosulfate, l'hyposulfite, le pyrosulfite ou un métal alcalin, des sels métalliques, tels que sous forme d'ions de fer (II) ou d'ions d'argent ou d'hydroxyméthylsulfoxylate de sodium. Le composant réducteur du catalyseur rédox utilisé de préférence est le sel de Mohr $(NH_4)_2Fe(SO_4)_2$, 6 $H_2O$. Sur la base de la quantité de monomères utilisés dans la polymérisation, de 5 x $10^{-6}$ à 1 mole % du composant réducteur du système de catalyseur redox et de 5 x $10^{-5}$ à 2 moles % du composant oxydant du catalyseur redox peuvent, à titre d'exemple, être utilisés. Au lieu du composant oxydant du catalyseur rédox, un ou plusieurs initiateurs azoïques solubles dans l'eau peuvent également être utilisés.

Pour l'étape a) du procédé de l'invention la concentration en poids totale en monomères libres par rapport à la charge de polymérisation est comprise entre 10 et 60 %, avantageusement entre 20 et 55% et encore plus avantageusement entre 25 et 50 %.

Pour l'étape a) de ce procédé, les monomères et les différents additifs de polymérisation sont dissous, par exemple, dans des récipients sous agitation dans le milieu aqueux à polymériser. Cette solution, aussi appelée charge à polymériser, est ajustée à une température d'initiation comprise entre -20° C à 50 ° C. Avantageusement cette température d'initiation est ajustée entre -5°C et 30°C et encore plus avantageusement entre 0 et 20°C.

Lorsque le polymère hydrosoluble structuré sous forme d'émulsion inverse eau dans huile ou de dispersion dans de l'huile est ajouté lors de l'étape a) du procédé de l'invention, il peut être ajouté lors de la dissolution des monomères et additifs de polymérisation. Ainsi il est mélangé dans la charge de polymérisation au moyen d'une pale d'agitation dans le but de disperser finement l'émulsion ou la dispersion inverse dans la charge de polymérisation. Il est également possible de faire passer le mélange au travers d'un homogénéiseur de type rotor, rotor/stator.

Un autre moyen d'ajouter l'émulsion ou la dispersion de polymère structuré à la charge de polymérisation est d'injecter l'émulsion dans le flux de charge de polymérisation qui va vers le réacteur de polymérisation, un mélangeur statique étant inséré entre le point d'injection de l'émulsion ou de la dispersion et le réacteur.

Afin d'éliminer l'oxygène résiduel de la charge de polymérisation (additivée ou non du polymère structuré sous forme d'émulsion inverse ou de dispersion dans l'huile), un gaz inerte est habituellement passé à travers celle-ci. Les gaz inertes appropriés à cet effet sont, par exemple, l'azote, le dioxyde de carbone ou des gaz rares tels que le néon ou l'hélium. La polymérisation est effectuée en l'absence d'oxygène, en introduisant les initiateurs dans l'ordre adéquat, connu de l'homme de métier, dans la solution à polymériser. Les initiateurs sont introduits soit sous forme soluble en milieu aqueux, soit, si on le souhaite, sous la forme d'une solution dans un solvant organique.

La polymérisation peut être effectuée en discontinu ou en continu. Dans une procédure discontinue, un réacteur est rempli d'une solution de monomères puis d'une solution de l'initiateur. Dès que la polymérisation commence, le mélange réactionnel se réchauffe en fonction des conditions de départ choisies, telles que la concentration des monomères dans la solution aqueuse et la nature des monomères. En raison de la chaleur de polymérisation libérée, la température du mélange réactionnel s'élève par exemple de 30 à 180 ° C, de préférence de 40° C à 130 ° C. La polymérisation peut être effectuée à pression normale, sous pression réduite ou même à pression élevée. Travailler à une pression élevée peut être avantageux dans les cas où la température maximale attendue dans la polymérisation est supérieure au point d'ébullition du mélange de solvants utilisé. D'autre part, il peut être avantageux, notamment lors de la préparation de produits de très haut poids moléculaire, d'abaisser la température maximale à l'aide d'un refroidissement, par exemple avec un fluide de refroidissement. Le réacteur est dans la plupart des cas gainé de telle sorte que le mélange réactionnel puisse être refroidi ou chauffé selon les besoins. Une fois la réaction de polymérisation terminée, le gel de polymère obtenu peut être rapidement refroidi, par exemple en refroidissant la paroi du réacteur.

En fin de réaction, le produit issu de la polymérisation est un gel hydraté tellement visqueux qu'il s'auto supporte (ainsi un cube de gel de 2,5 cm de côté maintient substantiellement sa forme lorsqu'il est posé sur une surface plane). Le gel ainsi obtenu est un gel viscoélastique.

A noter que lorsque la réaction est réalisée en réacteur, afin de faciliter la décharge du gel en fin de réaction, le réacteur est avantageusement sous forme tubulaire conique inversé (cône vers le bas) afin de décharger le gel vers le bas par application d'une pression de gaz inerte ou d'air en surface du gel ou sous forme d'un basculeur afin de décharger la masse de gel en faisant basculer le réacteur.

L'étape b) du procédé de l'invention consiste à granuler le gel de polymère hydrosoluble obtenu à l'étape a). La granulation consiste à découper le gel en petits morceaux. Avantageusement la taille moyenne de ces morceaux de gel est inférieure à 1 cm, plus avantageusement elle est comprise entre 4 et 8 mm. L'homme du métier saura choisir le moyen adapté pour une granulation optimale.

Lorsque l'émulsion inverse ou la dispersion dans l'huile de polymère structuré hydrosoluble est ajoutée pendant l'étape de granulation b) du procédé de l'invention, il peut être ajouté par pulvérisation à la surface des morceaux de gel.

Avantageusement, entre 0,1% et 2,0 % de tensioactif sous forme liquide peut être pulvérisé pendant l'étape b) (% en poids par rapport au poids total des monomères libres mis en jeu à l'étape a)).

L'étape c) du procédé consiste à sécher le polymère. Le moyen de séchage est un choix de routine pour l'homme du métier. Industriellement, le séchage est avantageusement effectué par sécheur à lit fluidisé ou à rotors, à l'aide d'air chauffé à une température comprise entre 70°C et 200°C, la température de l'air étant fonction de la nature du produit ainsi que du temps de séchage appliqué. A l'issue du séchage, le polymère hydrosoluble est physiquement sous forme de poudre.

Pour l'étape d) du procédé, la poudre est broyée et tamisée. L'étape de broyage consiste à casser les grosses particules de polymère en particules de plus petite taille. Cela peut s'effectuer par cisaillement ou par écrasement mécanique de la particule entre deux surfaces dures. Différents types d'équipements connus de l'homme du métier peuvent être employés à cet effet. Citons par exemple les broyeurs à rotors, où l'on vient écraser à l'aide de la partie rotative la particule sur une lame de compression ou bien le broyeur à cylindres, où la particule est écrasée entre deux cylindres en rotation. Le tamisage a ensuite pour but d'éliminer, en fonction des spécifications, les particules de taille moyenne trop petites ou trop grosses.

Avantageusement, entre 0,1% et 2,0 % de tensioactif sous forme solide peut être ajouté pendant l'étape d) du procédé (% en poids par rapport au poids total des monomères libres mis en jeu à l'étape a)).

Le procédé de l'invention implique qu'au moins 10% en poids, par rapport au poids total des monomères libres mis en jeu, de polymère hydrosoluble sous forme d'émulsion inverse eau dans huile ou de dispersion dans l'huile, contenant au moins un polymère hydrosoluble structuré, sont ajoutés pendant l'étape de polymérisation a) et optionnellement pendant l'étape de granulation b).

Les monomères libres par définition n'ont pas encore été polymérisés. De ce fait ceux-ci n'incluent pas les monomères du polymère structuré sous forme d'émulsion inverse ou de dispersion dans l'huile.

De préférence, entre 10 et 50 % en poids, par rapport au poids total des monomères libres mis en jeu, de polymère hydrosoluble sous forme d'émulsion inverse eau dans huile ou de dispersion dans l'huile, contenant au moins un polymère hydrosoluble structuré, sont ajoutés pendant l'étape de polymérisation a) et optionnellement pendant l'étape de granulation b).

Encore plus préférentiellement, entre 10 et 50 % en poids, par rapport au poids total des monomères libres mis en jeu, de polymère hydrosoluble sous forme d'émulsion inverse eau dans huile ou de dispersion dans l'huile, contenant au moins un polymère hydrosoluble structuré, sont ajoutés dans une proportion comprise entre 2/3 et 3/4 pendant l'étape de polymérisation a) et comprise entre 1/4 et 1/3 pendant l'étape de granulation b).

Selon un mode de réalisation préféré, entre 10 et 30 % en poids, par rapport au poids total des monomères libres mis en jeu, de polymère hydrosoluble sous forme d'émulsion inverse eau dans huile ou de dispersion dans l'huile, contenant au moins un polymère hydrosoluble structuré, sont ajoutés pendant l'étape de polymérisation a).

Avantageusement, pour l'étape de polymérisation a), au moins un monomère éthylénique monoinsaturé hydrosoluble non ionique (avantageusement entre 10 et 100 mol%) et, le cas échéant, au moins un monomère éthylénique insaturé hydrosoluble anionique ou cationique sont polymérisés.

Les monomères non ioniques, anioniques ou cationiques sont préférentiellement choisis parmi les listes décrites précédemment pour les polymères en émulsion inverse ou en dispersion dans l'huile.

Selon une autre préférence, lors de la polymérisation à l'étape a) du procédé de l'invention, préférentiellement la viscosité Brookfield de la charge de polymérisation à la température de polymérisation est inférieure à 100 centipoises (Module Brookfield : LV1, vitesse de rotation : 60 $tr.min^{-1}$). Cette viscosité correspond à la viscosité mesurée après ajout et homogénéisation du polymère structuré sous forme d'émulsion inverse eau dans huile ou de dispersion aqueuse dans la charge de polymérisation.

Selon un mode de réalisation préféré, le procédé de l'invention consiste pour l'étape a) à polymériser par voie radicalaire, au moyen d'initiateurs rédox et de composés azoïques, à une température d'initiation comprise entre 0 et 20°C au moins un monomère éthylénique monoinsaturé soluble en solution aqueuse, la concentration en poids totale en monomère par rapport à la charge de polymérisation étant comprise entre 25 et 50 %, en présence de 20 à 30 % en poids, par rapport au poids total des monomères libres mis enjeu, d'une émulsion inverse contenant entre 30 et 60% en poids d'un copolymère composé d'acrylamide et de 40 à 90 mol% d'acrylate de diméthylaminoéthyle quaternisé avec du chlorure de méthyle, structuré avec moins de 0,05 % de méthylènebisacrylamide, dont le coefficient de Huggins, à une concentration en poids en polymère de 5 $g.L^{-1}$ dans de l'eau déionisée et à une température de 25°C, est supérieur à 0,4, et la viscosité Brookfield de la charge de polymérisation à la température de polymérisation est inférieure à 100 centipoises (Module Brookfield : LV1, vitesse de rotation : 60 $tr.min^{-1}$) et pour l'étape b) à granuler le gel ainsi obtenu en présence de 5 à 10% en poids de ce polymère sous forme d'émulsion inverse.

Un dernier aspect de l'invention concerne l'utilisation des polymères obtenus selon le procédé de l'invention dans l'industrie du pétrole et du gaz, la fracturation hydraulique, les procédés de fabrication du papier, le traitement de l'eau, la déshydratation des boues, la construction, l'industrie minière, les cosmétiques, l'agriculture, l'industrie du textile et la détergence.

L'invention et les avantages qui en découlent ressortiront mieux des exemples de réalisation suivants.

## EXEMPLES

### *Exemple 1 : Synthèse par voie gel d'un copolymère acrylamide / acrylate de diméthylaminoéthyle quaternisé, (Adame Quat) en ajoutant à la charge de polymérisation 20% en poids de polymère structuré sous forme d'émulsion inverse.*

Dans un bécher de 2L, une charge aqueuse comprenant 113g d'acrylamide à 50% en poids dans l'eau, 773g d'Adame Quat (Adame Quat = acrylate de diméthylaminoéthyle quaternisé avec du chlorure de méthyle) à 80% en poids dans l'eau et 177g d'eau est préparée à température ambiante, puis le pH est ajusté entre 3 et 4 à l'aide d'acide phosphorique. Cette charge est ensuite refroidie à 10°C, puis placée dans un Dewar. 1,5g d'azobisisobutyronitrile sont introduits dans la charge ainsi que 420g d'une émulsion inverse (EM1) contenant 41 % en poids d'un copolymère acrylamide / Adame Quat (20/80 mol%), la proportion phase aqueuse / phase huileuse synthétique (Exxsol D100) étant de 70/30. Le copolymère de l'émulsion inverse est réticulé au MBA et a un coefficient de Huggins (à une concentration en poids en polymère de 5 $g.L^{-1}$, dans une solution aqueuse à 0,4 N de nitrate de sodium, à pH 3,5 et à une température de 25°C) de 0,8.

L'homogénéisation de la charge se fait à l'aide d'un mixeur à main à une vitesse de 500 tr/min pendant 20s. Cette charge comprenant les monomères et le polymère ramifié sous forme d'émulsion inverse est ensuite dégazée sous bullage d'azote pendant 20 minutes. La viscosité mesurée après dégazage est de 82 cP (Module Brookfield : LV1, vitesse de rotation : 60 $tr.min^{-1}$). On ajoute alors à la charge, exprimés par rapport à la quantité totale de monomères mis en jeu, 1,3 x $10^{-3}$ moles% d'hypophosphite de sodium, puis la réaction est initiée par ajouts successifs de 3,2 x $10^{-3}$ moles% de persulfate

de sodium puis 1,9 x $10^{-3}$ moles% de sel de Mohr. La durée de réaction est de 45 min, pour une température finale de 80°C. Le polymère obtenu se présente sous forme de gel ayant une texture permettant de le granuler puis de le sécher dans un flux d'air à 70°C pendant 60 min. Les grains secs de polymère sont ensuite broyés afin d'obtenir une granulométrie inférieure à 1,7mm. Le produit obtenu, qui est 100% hydrosoluble, a un poids moléculaire moyen en poids de 1,9 millions de daltons et un $K_H$ (à une concentration en poids en polymère de 5 g.$L^{-1}$, dans une solution aqueuse à 0,4 N de nitrate de sodium, à pH 3,5 et à une température de 25°C) de 0,69.

***Exemple 2: Synthèse par voie gel de type RAFT d'un copolymère acrylamide / Adame Quat en ajoutant à la charge de polymérisation 20% en poids de polymère structuré sous forme d'émulsion inverse.***

Dans un bécher de 2L, une charge aqueuse comprenant 113g d'acrylamide à 50% en poids dans l'eau, 773g d'Adame Quat à 80% en poids dans l'eau et 177g d'eau est préparée à température ambiante, puis le pH est ajusté entre 3 et 4 à l'aide d'acide phosphorique. Cette charge est ensuite refroidie à 10°C, puis placée dans un Dewar. 1,5g d'azobisisobutyronitrile (AIBN) sont introduits dans la charge ainsi que 420g de l'émulsion inverse (EM1) utilisée dans l'exemple 1. L'homogénéisation de la charge se fait à l'aide d'un mixeur à main à une vitesse de 500 tr/min pendant 20 secondes. Cette charge comprenant les monomères et le polymère ramifié sous forme d'émulsion inverse est ensuite dégazée sous bullage d'azote pendant 20 minutes. La viscosité mesurée après dégazage est de 80cP (Module Brookfield : LV1, vitesse de rotation : 60 tr.$min^{-1}$). On ajoute alors à la charge, exprimés par rapport à la quantité totale de monomères mis en jeu, 5,2 x 10-4 moles% de O-ethyl-S-(1-methoxy carbonyl ethyl) xanthate (agent de transfert RAFT), puis la réaction est initiée par ajouts successifs de 3,2 x 10-3 moles% de persulfate de sodium puis 1,9 x 10-3 moles% de sel de Mohr. La durée de réaction est de 60 min, pour une température finale de 80°C. Le polymère obtenu se présente sous forme de gel ayant une texture permettant de le granuler puis de le sécher dans un flux d'air à 70°C pendant 60 minutes. Les grains secs de polymère sont ensuite broyés afin d'obtenir une granulométrie inférieure à 1,7mm. Le produit obtenu, qui est 100% hydrosoluble, a un poids moléculaire moyen en poids de 2,1 millions de daltons et un $K_H$ (à une concentration en poids en polymère de 5 g.$L^{-1}$, dans une solution aqueuse à 0,4 N de nitrate de sodium, à pH 3,5 et à une température de 25°C) de 0,73.

***Exemple 3 (contre-exemple): Synthèse par voie gel d'un copolymère acrylamide / Adame Quat ramifié à l'aide de N,N'-Methylenebis(acrylamide) (MBA)***

Dans un bécher de 2L, une charge aqueuse comprenant 126g d'acrylamide à 50% en poids dans l'eau, 858g d'Adame Quat à 80% en poids dans l'eau et de 534g d'eau est préparée à température ambiante, puis le pH est ajusté entre 3 et 4 à l'aide d'acide phosphorique. Cette charge est ensuite refroidie à 0°C, puis placée dans un Dewar. 1,5g d'azobisisobutyronitrile sont introduits dans la charge que l'on dégaze sous bullage d'azote pendant 20 minutes. Pendant le bullage, on introduit, exprimé par rapport à la quantité totale de monomères mis enjeu 2,1 x $10^{-2}$ moles% d'hypophosphite de sodium ainsi que 6,6 x $10^{-3}$ moles% de MBA. La réaction est ensuite initiée à une température de 0°C en ajoutant successivement, toujours exprimés par rapport à la quantité totale de monomères mis enjeu, 3,4 x $10^{-3}$ moles% de persulfate de sodium et 3,4 x $10^{-4}$ moles% de sel de Mohr. La durée de réaction est de 30min, pour une température finale de 70°C. Le polymère obtenu se présente sous forme de gel ayant une texture permettant de le granuler puis de le sécher dans un flux d'air à 70°C pendant 60minutes. Les grains secs de polymère sont ensuite broyés afin d'obtenir une granulométrie inférieure à 1,7mm. Le produit obtenu, qui est 100% hydrosoluble, a un poids moléculaire moyen en poids de 2,4 millions de daltons et un $K_H$ (à une concentration en poids en polymère de 5 g.$L^{-1}$, dans une solution aqueuse à 0,4 N de nitrate de sodium, à pH 3,5 et à une température de 25°C) de 0,24.

Lorsque les polymères structurés sont obtenus par le procédé de l'invention (exemples 1 et 2) leur $K_H$ est supérieur à 0,4 alors qu'en ajoutant directement l'agent structurant (MBA) à la charge d'une polymérisation par voie gel, le $K_H$ reste inférieur à 0,3 (exemple 3 : contre-exemple).

## Revendications

**1.** Procédé pour préparer un polymère hydrosoluble structuré de poids moléculaire moyen en poids supérieur à 1 million de daltons et ayant un coefficient de Huggins $K_H$ supérieur à 0,4, le coefficient de Huggins $K_H$ étant mesuré à une concentration en poids en polymère de 5 g.$L^{-1}$, dans une solution aqueuse à 0,4 N de nitrate de sodium, à pH 3,5 et à une température de 25°C, le procédé comprenant les étapes successives suivantes :

a) Préparer un polymère, sous forme d'un gel, par polymérisation par voie radicalaire en solution aqueuse à une température d'initiation comprise entre -20°C et +50°C d'au moins un monomère éthylénique monoinsaturé hydrosoluble,
la concentration en poids totale en monomère(s) par rapport à la charge de polymérisation étant comprise entre 10 et 60 % ;
b) Granuler le gel de polymère ainsi obtenu ;
c) Sécher le gel de polymère pour obtenir un polymère sous forme de poudre ;

d) Broyer et tamiser la poudre ;

au moins 10% en poids de polymère hydrosoluble, par rapport au poids total du ou des monomère(s) éthylénique(s) monoinsaturé(s) hydrosoluble mis en jeu dans l'étape a), étant ajoutés pendant l'étape de polymérisation a) et optionnellement pendant l'étape de granulation b),
le polymère hydrosoluble étant structuré et ajouté sous forme d'émulsion inverse eau dans huile ou de dispersion dans l'huile.

**2.** Procédé selon la revendication 1, **caractérisé en ce qu'**entre 10 et 50 % en poids, par rapport au poids total des monomères libres mis en jeu, de polymère hydrosoluble sous forme d'émulsion inverse eau dans huile ou de dispersion dans l'huile, contenant au moins un polymère hydrosoluble structuré, sont ajoutés pendant l'étape de polymérisation a) et optionnellement pendant l'étape de granulation b).

**3.** Procédé selon la revendication 1, **caractérisé en ce qu'**entre 10 et 50 % en poids, par rapport au poids total des monomères libres mis en jeu, de polymère hydrosoluble sous forme d'émulsion inverse eau dans huile ou de dispersion dans l'huile, contenant au moins un polymère hydrosoluble structuré, sont ajoutés dans une proportion comprise entre 2/3 et 3/4 pendant l'étape de polymérisation a) et comprise entre 1/4 et 1/3 pendant l'étape de granulation b).

**4.** Procédé selon la revendication 1, **caractérisé en ce qu'**entre 10 et 30 % en poids, par rapport au poids total des monomères libres mis en jeu, de polymère hydrosoluble sous forme d'émulsion inverse eau dans huile ou de dispersion dans l'huile, contenant au moins un polymère hydrosoluble structuré, sont ajoutés pendant l'étape de polymérisation a).

**5.** Procédé selon l'une des revendications 1 à 4, **caractérisé en ce que** la viscosité Brookfield de la charge de polymérisation à la température de polymérisation est inférieure à 100 centipoises (Module Brookfield : LV1, vitesse de rotation : 60 $tr.min^{-1}$).

**6.** Procédé selon l'une des revendications 1 à 5, **caractérisé en ce que** le coefficient de Huggins du polymère structuré hydrosoluble de l'émulsion inverse eau dans huile ou de la dispersion dans l'huile à une concentration en poids en polymère de 5 $g.L^{-1}$, dans une solution aqueuse à 0,4 N de nitrate de sodium, à pH 3,5 et à une température de 25°C, est supérieur à 0,4.

**7.** Procédé selon l'une des revendications 1 à 6, **caractérisé en ce que** l'étape a) concerne la polymérisation d'au moins un monomère éthylénique monoinsaturé hydrosoluble non ionique et au moins un monomère éthylénique insaturé hydrosoluble anionique ou cationique, le monomère non ionique étant choisi parmi l'acrylamide, le méthacrylamide, le N,N-diméthylacrylamide, la N-vinylformamide, le N-vinyl acétamide, la N-vinylpyridine et la N-vinylpyrrolidone, l'acryloyl morpholine (ACMO) et la diacétone acrylamide,

le monomère anionique étant choisi parmi l'acide acrylique, l'acide méthacrylique, l'acide itaconique, l'acide maléique, l'acide 2-acrylamido-2-méthylpropane sulfonique, l'acide vinylsulfonique, l'acide vinylphosphonique, ledit monomère anionique étant non salifié, partiellement ou totalement salifié,
le monomère cationique étant choisi parmi l'acrylate de diméthylaminoéthyle quaternisé, le méthacrylate de diméthylaminoéthyle quaternisé, le chlorure de diméthyldiallylammonium, le chlorure d'acrylamido propyltriméthyl ammonium, et le chlorure de méthacrylamido propyltriméthyl ammonium.

**8.** Procédé selon l'une des revendications 1 à 7, **caractérisé en ce que** l'émulsion inverse eau dans huile ou la dispersion dans l'huile contient entre 10 et 70 % en poids de polymère hydrosoluble structuré.

**9.** Procédé selon l'une des revendications 1 à 8, **caractérisé en ce que** le polymère hydrosoluble contenu dans l'émulsion inverse ou dans la dispersion dans l'huile est composé des mêmes monomères éthyléniques monoinsaturés que ceux polymérisés à l'étape a).

**10.** Procédé selon la revendication 9 caractérisé en ce la proportion de chaque monomère constituant le polymère hydrosoluble structuré contenu dans l'émulsion inverse ou dans la dispersion dans l'huile est composé des mêmes proportions de monomères éthyléniques monoinsaturés que ceux polymérisés à l'étape a).

**11.** Procédé selon l'une des revendications 1 à 10, **caractérisé en ce que** le polymère hydrosoluble structuré contenu dans l'émulsion inverse ou dans la dispersion est structuré avec des monomères éthyléniques comportant au moins deux insaturations.

**12.** Procédé selon l'une des revendications 1 à 11, **caractérisé en ce que** l'huile de l'émulsion inverse ou de la dispersion a un point éclair supérieur à 60°C.

**13.** Procédé selon l'une des revendications 1 à 12, **caractérisé en ce que** l'émulsion inverse eau dans huile de polymère hydrosoluble structuré comprend :

- une phase hydrophile comprenant au moins un (co)polymère hydrosoluble structuré ;
- une phase lipophile ;
- au moins un polymère interfacial composé d'au moins un monomère de formule (I) :

[Chem. 1]

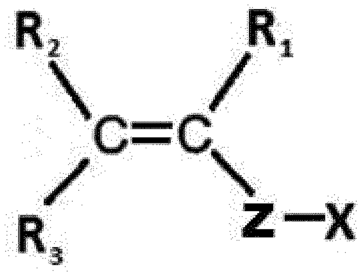

Formule (I)

dans laquelle,
- R1, R2, R3 sont indépendamment choisis dans le groupe comprenant un atome d'hydrogène, un groupe méthyle, un groupement carboxylate et Z-X,
- Z est choisi dans le groupe comprenant C(=O)-O ; C(=O)-NH ; O-C(=O) ; NH-C(=O)-NH ; NH-C(=O)-O ; et une chaine carbonée comportant de 1 à 20 atomes de carbone insaturée ou non, substituée ou non pouvant comporter un ou plusieurs hétéroatomes choisis parmi l'azote et l'oxygène,
- X est un groupe choisi parmi les alcanolamides, les esters de sorbitane, les esters de sorbitane éthoxylés, les esters de glyceryle, et les polyglycosides ; X comprenant une chaine hydrocarbonée, saturée ou insaturée, linéaire, ramifiée ou cyclique, éventuellement aromatique.

**14.** Procédé selon la revendication 1 consistant pour l'étape a) à polymériser par voie radicalaire, au moyen d'initiateurs rédox et de composés azoïques, à une température d'initiation comprise entre 0 et 20°C au moins un monomère éthylénique monoinsaturé soluble en solution aqueuse, la concentration en poids totale en monomère par rapport à la charge de polymérisation étant comprise entre 25 et 50 %, en présence de 20 à 30 % en poids, par rapport au poids total des monomères libres mis en jeu, d'une émulsion inverse contenant entre 30 et 60% en poids d'un copolymère composé d'acrylamide et de 40 à 90 mol% d'acrylate de diméthylaminoéthyle quaternisé avec du chlorure de méthyle, structuré avec moins de 0,05 % de methylènebisacrylamide, dont le coefficient de Huggins à une concentration en poids en polymère de 5 g.$L^{-1}$ dans de l'eau déionisée et à une température de 25°C est supérieur à 0,4, et la viscosité Brookfield de la charge de polymérisation à la température de polymérisation étant inférieure à 100 centipoises (Module Brookfield : LV1, vitesse de rotation : 60 tr.$min^{-1}$) et pour l'étape b) à granuler le gel ainsi obtenu en présence de 5 à 10% en poids de ce polymère sous forme d'émulsion inverse.

**15.** Utilisation des polymères obtenus selon le procédé des revendications 1 à 14 dans l'industrie du pétrole et du gaz, la fracturation hydraulique, les procédés de fabrication du papier, le traitement de l'eau, la déshydratation des boues, la construction, l'industrie minière, les cosmétiques, l'agriculture, l'industrie textile et la détergence.

**Patentansprüche**

**1.** Verfahren zur Herstellung eines strukturierten wasserlöslichen Polymers mit einem gewichtsmittleren Molekulargewicht von mehr als 1 Million Dalton und mit einem Huggins-Koeffizienten $K_H$ von mehr als 0,4, wobei der Huggins-Koeffizient $K_H$ bei einer Polymer-Gewichtskonzentration von 5 g.$L^{-1}$ in einer 0,4 N wässrigen Natriumnitratlösung bei einem pH-Wert von 3,5 und bei einer Temperatur von 25°C gemessen wird, wobei das Verfahren die folgenden aufeinanderfolgenden Schritte umfasst:

a) das Herstellen eines Polymers in Form eines Gels durch radikalische Polymerisation mindestens eines wasserlöslichen einfach ungesättigten ethylenischen Monomers in einer wässrigen Lösung bei einer Starttemperatur im Bereich zwischen -20°C und +50°C,
wobei die Gesamtgewichtskonzentration des Monomers (der Monomere), bezogen auf den Polymerisationsansatz, im Bereich zwischen 10 und 60 % liegt;
b) das Granulieren des so erhaltenen Polymergels;
c) das Trocknen des Polymergels, um ein Polymer in Pulverform zu erhalten;
d) das Mahlen und Sieben des Pulvers;

wobei mindestens 10 Gew.-% wasserlösliches Polymer, bezogen auf das Gesamtgewicht des oder der an Schritt a) beteiligten wasserlöslichen einfach ungesättigten ethylenischen Monomere, während des Polymerisationsschritts a) und gegebenenfalls während des Granulationsschritts b) hinzugefügt werden,
wobei das wasserlösliche Polymer in Form einer inversen Wasser-in-Öl-Emulsion oder einer Dispersion in Öl gestaltet und hinzugefügt wird.

**2.** Verfahren gemäß Anspruch 1, **dadurch gekennzeichnet, dass** zwischen 10 und 50 Gew.-% wasserlösliches Polymer in Form einer inversen Wasser-in-Öl-Emulsion oder einer Dispersion in Öl, enthaltend mindestens ein strukturiertes wasserlösliches Polymer, während des Polymerisationsschritts a) und gegebenenfalls während des Granulationsschritts b) hinzugefügt werden, bezogen auf das Gesamtgewicht der beteiligten freien Monomere.

**3.** Verfahren gemäß Anspruch 1, **dadurch gekennzeichnet, dass** zwischen 10 und 50 Gew.-% wasserlösliches Polymer in Form einer inversen Wasser-in-Öl-Emulsion oder einer Dispersion in Öl, enthaltend mindestens ein strukturiertes wasserlösliches Polymer, während des Polymerisationsschritts a) in einem Anteil zwischen 2/3 und 3/4 und während des Granulationsschritts b) in einem Anteil zwischen 1/4 und 1/3 hinzugefügt werden, bezogen auf das Gesamtgewicht der beteiligten freien Monomere.

**4.** Verfahren gemäß Anspruch 1, **dadurch gekennzeichnet, dass** zwischen 10 und 30 Gew.-% wasserlösliches Polymer in Form einer inversen Wasser-in-Öl-Emulsion oder einer Dispersion in Öl, enthaltend mindestens ein strukturiertes wasserlösliches Polymer, während des Polymerisationsschritts a) hinzugefügt werden, bezogen auf das Gesamtgewicht der beteiligten freien Monomere.

**5.** Verfahren gemäß einem der Ansprüche 1 bis 4, **dadurch gekennzeichnet, dass** die Brookfield-Viskosität des Polymerisationsansatzes bei der Polymerisationstemperatur geringer als 100 Centipoise ist (Brookfield-Modul: LV1, Drehgeschwindigkeit: 60 U/min).

**6.** Verfahren gemäß einem der Ansprüche 1 bis 5, **dadurch gekennzeichnet, dass** der Huggins-Koeffizient des wasserlöslichen strukturierten Polymers der inversen Wasser-in-Öl-Emulsion oder der Dispersion in Öl bei einer Polymer-Gewichtskonzentration von 5 $g.L^{-1}$ in einer 0,4 N wässrigen Natriumnitratlösung bei einem pH-Wert von 3,5 und bei einer Temperatur von 25°C größer als 0,4 ist.

**7.** Verfahren gemäß einem der Ansprüche 1 bis 6, **dadurch gekennzeichnet, dass** der Schritt a) die Polymerisation mindestens eines nichtionischen wasserlöslichen einfach ungesättigten ethylenischen Monomers und mindestens eines anionischen oder kationischen wasserlöslichen ungesättigten ethylenischen Monomers betrifft,

wobei das nichtionische Monomer aus Acrylamid, Methacrylamid, N,N-Dimethylacrylamid, N-Vinylformamid, N-Vinylacetamid, N-Vinylpyridin und N-Vinylpyrrolidon, Acryloylmorpholin (ACMO) und Diacetonacrylamid ausgewählt ist,

wobei das anionische Monomer aus Acrylsäure, Methacrylsäure, Itaconsäure, Maleinsäure, 2-Acrylamido-2-methylpropansulfonsäure, Vinylsulfonsäure, Vinylphosphonsäure ausgewählt ist, wobei das anionische Monomer nicht, teilweise oder vollständig in die Salzform überführt ist,

wobei das kationische Monomer aus quaternisiertem Dimethylaminoethylacrylat, quaternisiertem Dimethylaminoethylmethacrylat, Dimethyldiallylammoniumchlorid, Acrylamidopropyltrimethylammoniumchlorid und Methacrylamidopropyltrimethylammoniumchlorid ausgewählt ist.

**8.** Verfahren gemäß einem der Ansprüche 1 bis 7, **dadurch gekennzeichnet, dass** die inverse Wasser-in-Öl-Emulsion oder die Dispersion in Öl zwischen 10 und 70 Gew.-% strukturiertes wasserlösliches Polymer enthält.

**9.** Verfahren gemäß einem der Ansprüche 1 bis 8, **dadurch gekennzeichnet, dass** das wasserlösliche Polymer, das in der inversen Emulsion oder in der Dispersion in Öl enthalten ist, aus den gleichen einfach ungesättigten ethylenischen Monomeren aufgebaut wird wie diejenigen, die im Schritt a) polymerisiert werden.

**10.** Verfahren gemäß Anspruch 9, **dadurch gekennzeichnet, dass** der Anteil jedes Monomers, welches das strukturierte wasserlösliche Polymer bildet, das in der inversen Emulsion oder in der Dispersion in Öl enthalten ist, aus den gleichen Anteilen an einfach ungesättigten ethylenischen Monomeren aufgebaut wird wie diejenigen, die im Schritt a) polymerisiert werden.

**11.** Verfahren gemäß einem der Ansprüche 1 bis 10, **dadurch gekennzeichnet, dass** das strukturierte wasserlösliche Polymer, das in der inversen Emulsion oder in der Dispersion enthalten ist, mit ethylenischen Monomeren, die mindestens zwei Ungesättigtheiten aufweisen, gestaltet wird.

**12.** Verfahren gemäß einem der Ansprüche 1 bis 11, **dadurch gekennzeichnet, dass** das Öl der inversen Emulsion oder der Dispersion einen Flammpunkt von über 60°C aufweist.

**13.** Verfahren gemäß einem der Ansprüche 1 bis 12, **dadurch gekennzeichnet, dass** die inverse Wasser-in-Öl-Emulsion aus strukturiertem wasserlöslichem Polymer Folgendes umfasst:

- eine hydrophile Phase, die mindestens ein strukturiertes wasserlösliches (Co)polymer umfasst;
- eine lipophile Phase;
- mindestens ein Grenzflächenpolymer, bestehend aus mindestens einem Monomer der Formel (I):

[Chem. 1]

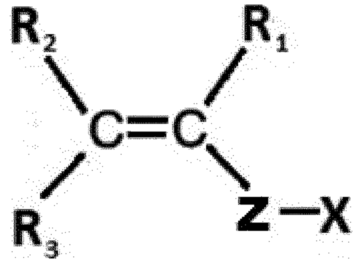

Formel (I)

wobei
- R1, R2, R3 unabhängig voneinander aus der Gruppe ausgewählt sind, umfassend ein Wasserstoffatom, eine Methylgruppe, eine Carboxylatgruppierung und Z-X,
- Z aus der Gruppe ausgewählt ist, umfassend C(=O)-O; C(=O)-NH; O-C(=O); NH-C(=O)-NH; NH-C(=O)-O; und eine Kohlenstoffkette mit 1 bis 20 Kohlenstoffatomen, die ungesättigt oder nicht ungesättigt, substituiert oder nicht substituiert ist, wobei sie ein oder mehrere Heteroatome, ausgewählt aus Stickstoff und Sauerstoff, umfassen kann,
- X eine Gruppe ist, die aus Alkanolamiden, Sorbitanestern, ethoxylierten Sorbitanestern, Glycerylestem und Polyglykosiden ausgewählt ist; wobei X eine gesättigte oder ungesättigte, lineare, verzweigte oder cyclische, gegebenenfalls aromatische Kohlenwasserstoffkette umfasst.

**14.** Verfahren gemäß Anspruch 1, umfassend für Schritt a) die radikalische Polymerisation mindestens eines einfach ungesättigten ethylenischen Monomers, das in einer wässrigen Lösung löslich ist, mit Hilfe von Redoxinitiatoren und Azoverbindungen bei einer Starttemperatur zwischen 0 und 20°C, wobei die Gesamtgewichtskonzentration des Monomers, bezogen auf den Polymerisationsansatz, im Bereich zwischen 25 und 50 % liegt, in Gegenwart von 20 bis 30 Gew.-%, bezogen auf das Gesamtgewicht der beteiligten freien Monomere, einer inversen Emulsion, enthaltend zwischen 30 und 60 Gew.-% eines aus Acrylamid bestehenden Copolymers, und von 40 bis 90 Mol-% Dimethylaminoethylacrylat, das mit Methylchlorid quaternisiert und mit weniger als 0,05 % Methylenbisacrylamid gestaltet ist, wobei der Huggins-Koeffizient davon bei einer Polymer-Gewichtskonzentration von 5 $g.L^{-1}$ in entionisiertem Wasser und bei einer Temperatur von 25°C größer als 0,4 ist und wobei die Brookfield-Viskosität des Polymerisationsansatzes bei der Polymerisationstemperatur geringer als 100 Centipoise ist (Brookfield-Modul: LV1, Drehgeschwindigkeit: 60 U/min), und für Schritt b) das Granulieren des so erhaltenen Gels in Gegenwart von 5 bis 10 Gew.-% dieses Polymers in Form einer inversen Emulsion.

**15.** Verwendung der gemäß dem Verfahren nach den Ansprüchen 1 bis 14 erhaltenen Polymere in der Öl- und Gasindustrie, beim Fracking, in Papierherstellungsverfahren, bei der Wasseraufbereitung, bei der Schlammentwässerung, im Bauwesen, beim Bergbau, für Kosmetika, in der Landwirtschaft, in der Textilindustrie und für Waschmittel.

## Claims

**1.** Method for preparing a structured water-soluble polymer of weight-average molecular weight greater than 1 million Daltons and having a Huggins coefficient $K_H$ greater than 0.4, the Huggins coefficient $K_H$ being measured at a polymer weight concentration of 5 g.L-1, in a 0.4 N aqueous solution of sodium nitrate, at pH 3.5 and a temperature of 25°C, the method comprises the following successive steps:

a) Preparing a polymer, in the form of a gel, by free-radical polymerization in aqueous solution at an initiation temperature between -20°C and +50°C of at least one water-soluble monounsaturated ethylenic monomer,
the total weight concentration of monomer(s) in relation to the polymerization charge being between 10 and 60%;
b) Granulating the resulting polymer gel;
c) Drying the polymer gel to obtain a polymer in powder form;
d) Grinding and sifting the powder;

at least 10% by weight of water-soluble polymer, based on the total weight of the water-soluble monounsaturated ethylenic monomer or monounsaturated ethylenic monomers used in step a), being added during the polymerization step a) and optionally during the granulation step b),
the water-soluble polymer being structured and added as a water-in-oil inverse emulsion or dispersion in oil.

**2.** Method according to claim 1, **characterized in that** between 10 and 50% by weight, based on the total weight of free monomers involved, of water-soluble polymer in the form of a water-in-oil inverse emulsion or dispersion in oil, containing at least one structured water-soluble polymer, is added during the polymerization step a) and optionally during the granulation step b).

**3.** Method according to claim 1, **characterized in that** between 10 and 50% by weight, based on the total weight of the free monomers involved, of water-soluble polymer in the form of a water-in-oil inverse emulsion or in dispersion oil, containing at least one structured water-soluble polymer, are added in a proportion of between 2/3 and 3/4 during the polymerization step a) and of between 1/4 and 1/3 during the granulation step b).

**4.** Method according to claim 1, **characterized in that** between 10 and 30 %, based on the total weight of the free monomers involved, of water-soluble polymer in the form of a water-in-oil inverse emulsion or dispersion in oil, containing at least one structured water-soluble polymer, is added during the polymerization step a).

**5.** Method according to any of claims 1 to 4, **characterized in that** the Brookfield viscosity of the polymerization charge at the polymerization temperature is less than 100 centipoise (Brookfield modulus: LV1, speed of rotation: 60 rpm-1).

**6.** Method according to any of claims 1 to 5, **characterized in that** the Huggins coefficient of the water-soluble structured polymer of the water-in-oil inverse emulsion or of the dispersion in oil at a polymer weight concentration of 5g $L^{-1}$ in a 0.4 N aqueous solution of sodium nitrate at pH 3.5 and a temperature of 25°C is greater than 0.4.

**7.** Method according to any of claims 1 to 6, **characterized in that** step a) involves the polymerization of at least one nonionic water-soluble monounsaturated ethylenic monomer and at least one anionic or cationic water-soluble unsaturated ethylenic monomer,

the nonionic monomers is selected from acrylamide, methacrylamide, N,N-dimethylacrylamide, N-vinyl formamide, N-vinyl acetamide, N-vinyl pyridine and N-vinylpyrrolidone, acryloyl morpholine (ACMO) and diacetone acrylamide,
the anionic monomer being selected from acrylic acid, methacrylic acid, itaconic acid, maleic acid, 2-acrylamido-2-methyl propane sulfonic acid, vinylsulphonic acid, vinyl phosphonic acid, said anionic monomer being not salified, or partially, or totally salified,
the cationic monomers being selected from quaternized dimethyl amino ethyl acrylate, quaternized dimethyl amino ethyl methacrylate, dimethyl diallyl ammonium chloride, acrylamido propyl trimethyl ammonium chloride, and methacryl amido propyl trimethyl ammonium chloride.

**8.** Method according to any of claims 1 to 7, **characterized in that** the water-in-oil inverse emulsion or the dispersion in oil contains between 10 and 70% by weight of structured water-soluble polymer.

**9.** Method according to any of claims 1 to 8, **characterized in that** the structured water-soluble polymer contained in the inverse emulsion or in the dispersion in oil is composed of the same monounsaturated ethylenic monomers as those polymerized in step a).

**10.** Method according to claim 9, **characterized in that** the proportion of each monomer constituting the structured water-soluble polymer contained in the inverse emulsion or dispersion in oil is composed of the same proportions of monounsaturated ethylenic monomers as those polymerized in step a).

**11.** Method according to any of claims 1 to 10, **characterized in that** the structured water-soluble polymer contained in the inverse emulsion or the dispersion is structured with ethylenic monomers having at least two unsaturations.

**12.** Method according to any of claims 1 to 11, **characterized in that** the oil in the inverse emulsion or the dispersion has a flash point above 60°C.

**13.** Method according to any of claims 1 to 12, **characterized in that** the water-in-oil inverse emulsion of the structured water-soluble polymer comprises:

- a hydrophilic phase comprising at least one structured water-soluble (co)polymer;
- a lipophilic phase;
- at least one interfacial polymer composed of at least one monomer of formula (I):

[Chem. 1]

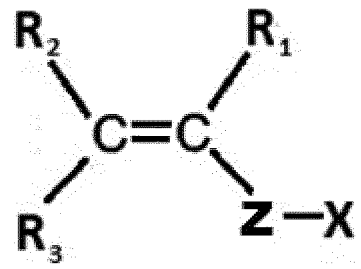

Formula (I)

wherein,
- R1, R2, R3 are independently selected from the group consisting of a hydrogen atom, a methyl group, a carboxylate group and Z-X,

- Z is selected from the group comprising C(=O)-O; C(=O)-NH; O-C(=O); NH-C(=O)-NH; NH-C(=O)-O; and a saturated or unsaturated carbon chain comprising from 1 to 20 carbon atoms, substituted or unsubstituted, possibly comprising one or more heteroatoms chosen from nitrogen and oxygen,
- X is a group chosen from alkanolamides, sorbitan esters, ethoxylated sorbitan esters, glyceryl esters, and polyglycosides; X comprising a hydrocarbon chain, saturated or unsaturated, linear, branched or cyclic, optionally aromatic.

**14.** Method according to claim 1 consisting for step a) of polymerizing by the radical route, by means of redox initiators and azo compounds, at an initiation temperature of between 0 and 20°C at least one monounsaturated ethylenic monomer soluble in aqueous solution, the concentration by total weight of monomer relative to the polymerization charge being between 25 and 50%, in the presence of 20 to 30% by weight, relative to the total weight of the free monomers involved, of an inverse emulsion containing between 30 and 60% by weight of a copolymer composed of acrylamide and 40 to 90 mol% of dimethylaminoethyl acrylate quaternized with methyl chloride, structured with less than 0.05% of methylenebisacrylamide, of which the Huggins coefficient, at a concentration by weight of polymer of 5 $gL^{-1}$ in deionized water and at a temperature of 25°C, is greater than 0.4, and the Brookfield viscosity of the polymerization charge at the temperature of polymerization being less than 100 centipoise (Brookfield modulus: LV1, speed of rotation: 60 rpm-1) and for step b) to granulate the gel thus obtained in the presence of 5 to 10% by weight of this polymer in the form of an inverse emulsion.

**15.** Use of the polymers obtained according to the method of claims 1 to 14 in the oil and gas industry, hydraulic fracturing, papermaking processes, water treatment, sludge dewatering, construction, mining, cosmetics, agriculture, textile industry and detergents.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2010091333 A
- JP 2018216407 A


### Littérature non-brevet citée dans la description


- **GRIFFIN WC.** Classification of Surface-Active Agents by HLB. *Journal of the Society of Cosmetic Chemists,* 1949, vol. 1, 311-326